Europäisches Patentamt

**European Patent Office**

**Office européen des brevets**

(11) Numéro de publication: **0 013 845**
A1

# DEMANDE DE BREVET EUROPEEN

(21) Numéro de dépôt: 79400930.8

(22) Date de dépôt: 29.11.79

(51) Int. Cl.³: **F 16 C 1/04,** F 16 C 11/06
// F16L27/04, B25J17/02

---

(30) Priorité: **17.01.79 FR 7901070**

(71) Demandeur: **REGIE NATIONALE DES USINES RENAULT, Boite postale 103 8-10 avenue Emile Zola, F-92109 Boulogne-Billancourt (FR)**

(43) Date de publication de la demande: **06.08.80 Bulletin 80/16**

(72) Inventeur: **Cloarec, Laurent, 27 Résidence de la Gaillardeire, F-78590 Noisy-le-Roi (FR)**

(84) Etats contractants désignés: **DE GB IT SE**

(74) Mandataire: **Jacques, Max et al, RNUR - S. 0804 BP 103, F-92109 Boulogne Billancourt (FR)**

---

(54) **Articulation à rotule pour bras polyarticulé.**

(57) L'articulation à rotule pour bras polyarticulé comporte deux corps cylindriques constituant des phalanges (7, 12) terminés chacun par une paire de zâchoires (8, 9) prenant appui sur une sphère (1) creuse, limitée par deux plans parallèles sensiblement équidistants du centre de la sphère, la partie centrale creuse des corps cylindriques (7, 12) et de la sphère (1) servant au passage du dispositif de synchronisation des mouvements des phalanges.

EP 0 013 845 A1

ACTORUM AG

- 1 -

ARTICULATION A ROTULE POUR BRAS POLYARTICULE

La présente invention, due à Monsieur Laurent CLOAREC, concerne un système d'articulation à rotule tel qu'on en utilise dans des dispositifs articulés, et en particulier dans des bras polyarticulés. De tels bras sont utilisés par exemple pour la réalisation de robots. S'ils comportent un assez grand nombre de "phalanges", de tels bras permettent de simuler des mécanismes à élasticité ou/et déformation réparties. Ils permettent donc, associés à d'autres mécanismes, la réalisation d'appareils qu'on appelle parfois "trompes" et qui, quand ils sont fixés à une de leurs extrémités, par exemple à un robot, et quand ils recoivent, à leur autre extrémité, un outil qui peut être une pince de soudure par points, une perceuse, un pistolet à peinture, etc., permettent d'amener ledit outil derrière un obstacle en le contournant. A l'aide de telles trompes, on peut aussi pénétrer dans un volume important, dans lequel on doit effectuer un travail, par une ouverture de relativement petites dimensions. Une telle trompe a été décrite dans le brevet français N° 77-02387 déposé le 28 janvier 1977 pour "Bras polyarticulé pour robot ou automate". Dans le brevet ci-dessus mentionné, comme dans d'autres brevets concernant le même domaine, on utilise différents types de rotules. Certaines peuvent se déboîter à tout moment, et, pour interdire cela, on doit mettre les éléments composant l'articulation à rotule sous précharge à l'aide de ressorts. Une telle précharge augmente les frottements internes et les contraintes, et diminue de ce fait la durée de vie des rotules en même temps qu'elle augmente la puissance nécessaire à la commande. Pour d'autres types de rotules, le

- 2 -                    0013845

déboîtement est rendu impossible par un sertissage. Cette opération est très avantageuse tant du point de vue de l'usure que du point de vue de la puissance nécessaire, mais elle rend le dispositif impossible ou difficile à démonter. De plus, un remontage rend aussi, la plupart du temps, indispensable un changement des pièces constitutives des articulations à rotule.

On connaît aussi des rotules qui sont indémontables quand elles sont mises en position de fonctionnement normal, mais qui deviennent facilement démontables quand les pièces constitutives sont mises dans une position particulière qui n'est jamais atteinte quand l'articulation est normalement utilisée. Ces rotules ont plusieurs inconvénients importants qui interdisent pratiquement leur utilisation sur les bras polyarticulés. Ces inconvénients découlent essentiellement du fait que l'articulation à rotule ci-dessus est composée uniquement de deux pièces. La première est formée d'un élément de sphère convexe limité par deux plans parallèles disposés symétriquement de part et d'autre du centre de la sphère. Cet élément sphérique peut être raccordé à un arbre par un trou perpendiculaire aux deux plans et passant par son centre. Le deuxième élément est composé d'une portée sphérique concave, de même rayon que l'élément précédent, formé dans une pièce de forme générale cylindrique dont l'axe passe par l'axe de la sphère. Le deuxième élément est limité axialement par deux plans parallèles, généralement symétriques par rapport au centre de la sphère. Pour permettre l'assemblage des deux éléments, l'élément portant la sphère concave est muni d'une encoche qui permet à l'élément sphérique de pénétrer jusqu'à ce que les centres des deux sphères soient confondus. Il faut pour cela que l'axe de révolution de l'élément sphérique convexe et l'axe de révolution de l'élément sphérique concave soient perpendiculaires. On peut alors faire pivoter les deux éléments l'un par rapport à l'autre de façon à amener les deux axes à être confondus. Ensuite, les deux éléments peuvent être animés l'un par rapport à l'autre de mouvements d'oscillation d'amplitude limitée, et de mouvements de rotation autour de leurs axes respectifs. Le fait que ces articulations à rotules soient composées de deux éléments seulement fait que si on peut raccorder l'élément sphérique concave à une "phalange" tubulaire de grand diamètre, l'élément sphérique convexe ne peut être relié à une phalange que par un arbre central de petit diamètre. Encore celui-ci doit-il être démonté pour permettre l'assemblage des deux éléments de l'articulation à rotule.

Or, la réalisation de trompes à phalanges synchronisées, telles que celles auxquelles est préférentiellement destinée la présente invention, nécessite le passage dans le centre desdites articulations d'un système de synchronisation entre phalanges. L'arbre de petit diamètre rendu nécessaire par le système d'articulation décrit ci-dessus rend pratiquement impossible le passage en son centre d'un tel système de synchronisation. Il est à noter enfin que la possibilité pour les éléments de l'articulation à rotule de pouvoir effectuer des rotationsd'angles quelconques autour de leurs axes de révolution respectifs, n'est d'aucune utilité pour la réalisation de bras polyarticulés qui ne comportent que deux degrés de liberté leur permettant de prendre une courbure quelconque dans un plan quelconque contenant l'axe commun à toutes les phalanges quand celles-ci sont alignées.

Le but principal de la présente invention est de permettre la réalisation d'une articulation à rotule n'ayant aucun des défauts signalés ci-dessus tout en en possédant les qualités utiles. En particulier, l'articulation à rotule comprendra trois éléments, tous pouvant être de configuration tubulaire dont l'alésage est de diamètre sensiblement égal à celui de la sphère formant articulation à rotule. On pourra ainsi faire passer dans leur centre tout dispositif utile de synchronisation entre "phalanges".

Un avantage de la présente invention est la réalisation d'un dispositif d'articulation à rotule facile et économique à fabriquer qui permet des rotations d'amplitude limitée, mais en tout cas suffisante, autour de tout axe passant par le centre de la sphère formant rotule.

Un autre avantage de la présente invention est de permettre la réalisation d'une articulation à rotule facilement montable et non moins facilement démontable bien qu'elle soit indémontable dans sa position normale de fonctionnement.

D'autres avantages ressortiront de la description qui suit. De plus, il va de soi que l'utilisation d'un tel système d'articulation à rotule ne saurait être limitée aux bras polyarticulés tels que ceux qu'on utilise sur des robots, et qu'aucune autre utilisation ne saurait limiter la portée de la présente invention.

Afin de mieux faire comprendre l'objet de la présente invention, on fait référence dans le texte aux figures ci-après :

- La figure 1 représente les trois éléments de l'articulation suivant la présente invention, séparés les uns des autres mais dans des positions relatives permettant leur assemblage.

- La figure 2 représente un des manchons et l'élément sphérique formant rotule, celui-ci étant représenté dans la position précédant le montage et dans la position assemblage avec ledit manchon.

- La figure 3 représente l'un des manchons dans lequel est assemblé l'élément sphérique formant rotule, le deuxième manchon étant prêt d'être assemblé.

- La figure 4 représente l'articulation suivant l'invention complètement assemblée.

- La figure 5 représente une vue en coupe de ladite articulation par un plan contenant les axes des manchons quand ils sont alignés.

- La figure 6 représente une vue en coupe de ladite articulation comportant un élément limitant le débattement angulaire de l'élément sphérique formant rotule avec l'un des manchons.

- La figure 7 représente une articulation suivant l'invention, reliée au moyen d'une liaison coulissante au manchon d'un deuxième ensemble d'articulation suivant l'invention.

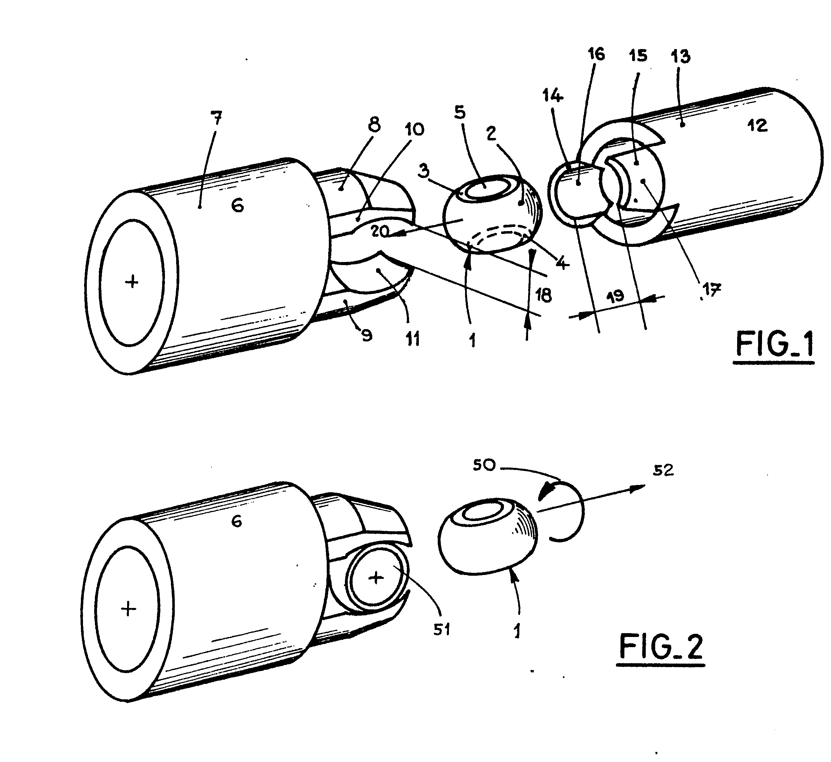

En se référant à la figure 1, on voit un élément sphérique convexe 1, lequel est formé d'une surface sphérique 2 formée à la surface d'une pièce qui peut être faite en un matériau rigide quelconque mais dont les propriétés sont adaptées à la fonction et aux efforts reçus par ladite articulation à rotule. Par exemple, l'élément 1 peut être en métal fritté, acier, bronze ou autre, peut être usiné dans un métal ou dans un plastique, peut être forgé, etc. La qualité de son état de surface et ses tolérances devront aussi être compatibles avec les fonctions de ladite articulation. Ladite surface sphérique 2 est limitée par deux plans parallèles 3 et 4 sensiblement symétriques par rapport au centre de la sphère. Les intersections de la surface sphérique et de ces plans forment donc deux cercles de diamètres voisins. Un alésage 5 peut être percé perpendiculairement auxdits plans 3 et 4 dans l'élément sphérique 1. Le diamètre

- 5 -                                    0013845

de cet alésage peut être aussi grand qu'on le veut avec pour
limite le diamètre du plus petit des cercles intersections des
plans 3 et 4 et de la surface sphérique 2.

Une première phalange 6 est forméed'un élément tubulaire 7 de
diamètre aussi grand qu'on le veut, mais dont le diamètre intérieur
sera sensiblement égal au diamètre de l'alésage, ou plus grand,
formé dans l'élément sphérique 1. Cet élément tubulaire 7 est
prolongé par un élément 8 et par un élément 9 formant comme les
mors d'une pince mais rendus solidaires et rigides vis à vis de
l'élément tubulaire 7 avec lequel ils peuvent d'ailleurs former
une seule pièce. Dans ces éléments 8 et 9, on forme des parties de
surface sphérique concave 10 et 11 de même diamètre que la surface
sphérique convexe 1. La largeur des "becs" 8 et 9 est telle que,
une deuxième pièce 12 rigoureusement identique à la pièce 6 et
comportant, elle aussi, un élément tubulaire 13 identique à 7 et
deux mors 14 et 15 respectivement identiques à 8 et 9 comportant
des surfaces sphériques 16 et 17, respectivement identiques à 10 et
11, puisse, quand elle est tournée de 90° par rapport à son axe,
avoir ses mors 14 et 15 qui peuvent s'engager autour des mors 8 et 9
jusqu'à ce que les centres de leurs surfaces concaves sphériques
respectives soient confondus. Dans cette position, on peut
alors faire pivoter les deux pièces 6 et 12 autour de tout axe
passant par le centre de ladite surface sphérique à un angle suffisant pour que la rotule puisse fonctionner de façon satisfaisante.
On voit qu'il est ici impossible de définir la "largeur" des becs 8,
9, 14 et 15 d'une autre manière que fonctionnellement. Dans la réalité, on peut facilement, grâce à une épure, définir les formes
limites des mors, en fonction des angles de rotation désirés.

De plus, ces mors sont, à leur extrémité opposée à celle des manchons tubulaires respectifs 7 et 13, ouverts et la largeur de cette
ouverture respectivement 18 et 19, est au moins égale à la distance
des deux plans 3 et 4 limitant la surface sphérique 2, et elle est
aussi inférieure au diamètre de ladite surface sphérique. De cette
façon, quand l'élément sphérique 1 est dans la position représentée à la figure 1 par rapport à la "phalange" 6, on voit que par
simple translation dans la direction 20, on peut amener ledit
élément sphérique 1 à l'intérieur des "mors" de pince 8 et 9, de façon que les centres des surfaces sphériques convexes et concaves coïncident. Cette opération étant faite, une rotation dont le vecteur représentatif est 50 (figure 2) peut amener la pièce 1 à se positionner en 51 entre les "mors" 8 et 9. On voit déjà qu'à ce moment, une force s'exerçant dans la direction 52 entre la pièce 1 et la phalange 6 ne pourra plus amener de séparation entre lesdites deux pièces.

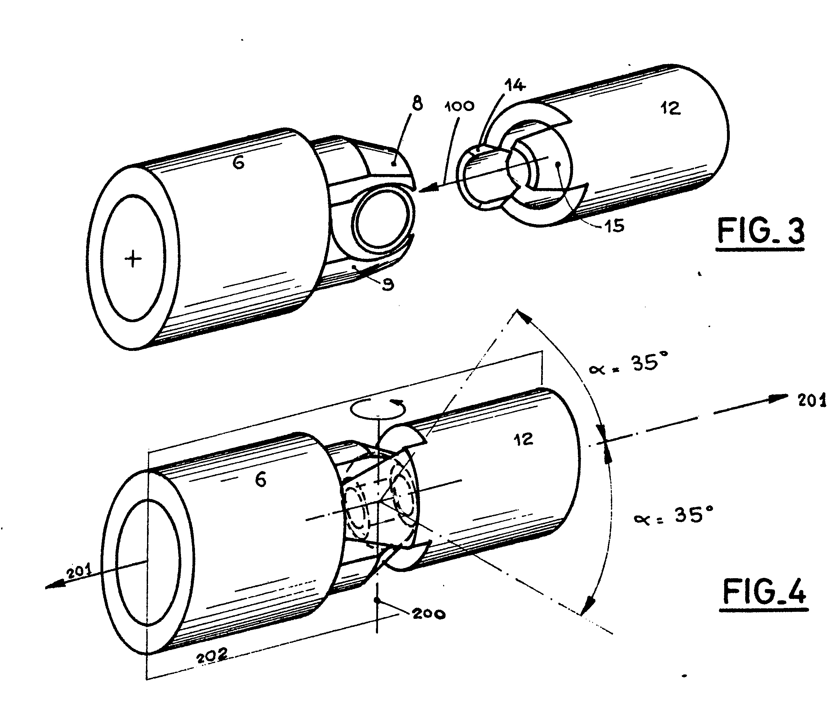

La pièce 1 étant dans la position 51 de la figure 2, on peut alors par une simple translation suivant 100 (figure 3) amener les "mors" 14 et 15 de la phalange 12 à pénétrer entre et en dehors des "mors" 8 et 9 de la phalange 6 jusqu'à ce que les centres des surfaces sphériques 16 et 17 soient aussi confondus avec le centre des surfaces sphériques 2, 10 et 11. A ce moment, il suffit de faire tourner la pièce 1 autour d'un axe 200 d'un angle de 90° pour amener l'alésage 5 de l'élément sphérique 1 en position de coaxialité avec les axes des phalanges tubulaires 6 et 12. A ce moment, on voit qu'une force 201 s'exerçant sur les deux phalanges 6 et 12 et tendant à les séparer, ou au contraire à les rapprocher, reste sans effet, l'élément sphérique 1 verrouillant 6 et 12 ensemble, de façon que les centres des surfaces sphériques 10, 11, 16 et 17 soient toujours confondus et leur permettant des déplacements angulaires limités mais suffisants, autour de tout axe passant par ledit centre.

Pour une application typique pour un bras polyarticulé, le système peut être dessiné, en particulier les mors 8, 9, 14 et 15 de façon que cet angle puisse atteindre une valeur de 30 à 35° (figure 4). Par contre, quand les éléments tubulaires sont coaxiaux, la construction objet de l'invention ne permet pas une rotation de grande amplitude autour de l'axe commun. Cela est voulu car, pour l'application préférentielle mentionnée, une telle rotation n'est même pas nécessaire du tout.

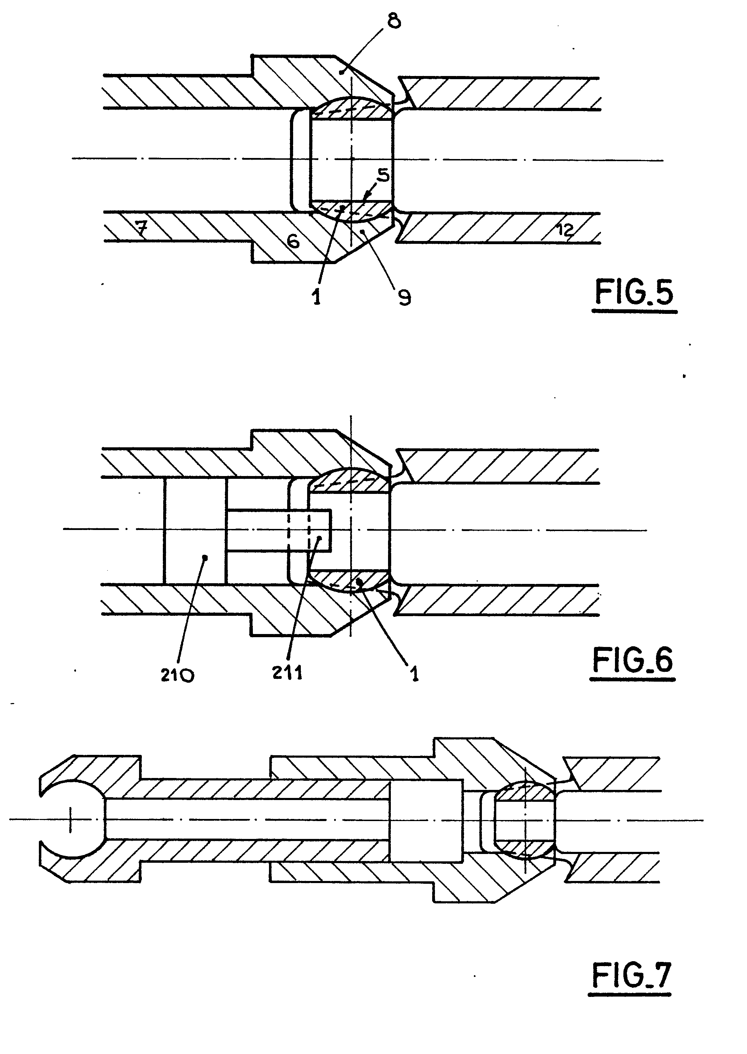

Sur la figure 5, on voit aussi le manchon tubulaire ou phalange 6 avec les mors 8 et 9 en coupe par un plan de trace 202 sur la figure 4. On voit aussi l'élément sphérique 1, le manchon tubulaire 12 avec une vue du mors 14 dont la forme est telle qu'elle permette une rotation "suffisante" des deux phalanges, l'une par rapport à l'autre.

La figure 5 montre bien aussi l'alésage de diamètre important dégagé.

intérieurement par le dispositif suivant l'invention, qui permet le passage des dispositifs de synchronisation des phalanges. On voit cependant sur la figure 5 qu'il reste à l'articulation suivant l'invention un inconvénient grave mais qu'il est facile de faire disparaître, ainsi qu'on le verra ci-après. En effet, la position angulaire de l'élément sphérique 1 n'est pas définie. En fonctionnement donc, elle subit des variations et il est alors évident qu'à un moment elle peut occuper une position telle que le démontage de l'articulation soit possible, entraînant éventuellement une rupture de la machine utilisant l'articulation et en tout cas son arrêt pour réparation.

Pour empêcher cela, il suffit par exemple d'empêcher l'élément sphérique 1 de dépasser une certaine position angulaire par rapport à l'une des deux phalanges. Cela est réalisé sur la figure 6, en disposant dans l'élément tubulaire 7 une pièce cylindrique fixe 210 dont une extrémité 211 s'engage dans l'alésage central 5 de l'élément sphérique 1, lui interdisant ainsi une rotation supérieure à un angle défini par le jeu entre le diamètre de l'extrémité 211 de la pièce 210 et le diamètre de l'alésage 5.

Un inconvénient introduit par la pièce 210 est qu'elle bouche, au moins partiellement, car elle-même peut être tubulaire, l'alésage du dispositif d'articulation à rotule. Quand on a réellement besoin de tout cet alésage pour y faire passer le dispositif de synchronisation des phalanges, la solution est encore beaucoup plus simple ; c'est le dispositif de synchronisation des phalanges qui joue lui- même le rôle de limiteur de rotation de l'élément sphérique 1. Cette limitation angulaire ne coûte alors rien. Il suffit de retirer l'élément de synchronisation pour pouvoir désolidariser les deux phalanges 6 et 12, après avoir fait pivoter l'élément sphérique 1 de la manière inverse de celle utilisée pour l'assemblage. Bien d'autres moyens que nous n'avons pas décrits permettant de limiter l'angle de rotation maximal de l'élément sphérique 1 par rapport à l'une ou l'autre des phalanges sont imaginables pour l'homme de l'art, et ils ne sauraient être considérés comme un élément nouveau de la présente invention.

0013845

Bien entendu, chaque manchon tubulaire peut porter à chacune de ses extrémités une telle articulation à rotule, formant ainsi un bras polyarticulé ayant un nombre quelconque de rotules. De même un certain nombre de ces manchons tubulaires peuvent recevoir dans leur alésage, à montage coulissant, le manchon tubulaire d'un autre système d'articulation à rotule, permettant ainsi quand cela est nécessaire une variation de la distance des centres des sphères de deux articulations consécutives comme on le voit à la figure 7.

REVENDICATIONS.

1°) Articulation à rotule pour bras polyarticulé de type démontable comportant deux manchons tubulaires sur les parties extérieures desquels est formé un engrenage ayant des dents radiales qui s'étendent parallèlement à l'axe de chaque manchon tubulaire, qui sont interdigitées et qui délimitent un espace interne enfermant ladite rotule dans laquelle est réalisé un alésage d'un diamètre sensiblement égal à celui des manchons tubulaires, caractérisée en ce que la rotule (2) est une sphère limitée par deux plans parallèles sensiblement équidistants du centre de la sphère en ce que l'engrenage est constitué par deux fourches (8, 15, 17) prévues pour s'ajuster entre elles et sur ou s'assembler avec ladite rotule, chaque fourche comprenant deux bras courbes dont les bords extrêmes sont espacés l'un de l'autre d'une distance inférieure au diamètre de la sphère, la longueur des bras de fourche étant de l'ordre de grandeur du diamètre de la rotule si bien que les deux fourches se maintiennent par élasticité au contact de la sphère à l'encontre des effets de délogement longitudinal, les bras des fourches étant interdigités après assemblage sur le pourtour de la dite rotule.

2°) Articulation à rotule pour bras polyarticulé suivant la revendication 1, caractérisée en ce que l'un au moins desdits corps cylindriques (6, 12) est équipé à sa seconde extrémité d'une fourche identique à celle de sa première extrémité lui permettant de participer à la constitution d'une seconde articulation à rotule identique à la précédente.

3°) Articulation à rotule pour bras polyarticulé suivant la revendication 1, caractérisée en ce qu'au moins un manchon tubulaire (6, 12) est utilisé comme élément de guidage coulissant pour un autre manchon d'un second système d'articulation à rotule

4°) Articulation à rotule pour bras polyarticulé suivant la revendication 1, caractérisée par une pièce cylindrique (210) s'enfilant à frottement doux dans l'un desdits manchons tubulaires (6, 12) et terminée par un nez (211) pénétrant dans l'alésage (5) de la sphère centrale (1) pour s'opposer à ses rotations.

5°) Bras polyarticulé pour robot ou automate, comportant une multiplicité de phalanges successives en vue de réaliser un mécanisme à élasticité et/ou déformation réparties, caractérisé en ce qu'il incorpore une multiplicité d'articulations à rotules réalisées suivant l'une quelconque des revendications 1 à 4.

0013845

FIG_1

FIG_2

8  100  14  12

FIG. 3

15  6

9  +

$\alpha = 35°$  201

12

6  201

$\alpha = 35°$

200

202

FIG. 4

**FIG.5**

**FIG.6**

**FIG.7**

# RAPPORT DE RECHERCHE EUROPEENNE

Office européen des brevets

**0013845**

Numéro de la demande

EP 79 40 0930

## DOCUMENTS CONSIDERES COMME PERTINENTS

| Catégorie | Citation du document avec indication, en cas de besoin, des parties pertinentes | Revendication concernée |
|---|---|---|
| X | <u>FR - A - 919 410</u> (BORGWARNER)<br>* Document entier * | 1 |
| | -- | |
| X | <u>DE - C - 98 554</u> (PILAIN)<br>* Document entier * | 1,2,5 |
| | -- | |
| | <u>DE - C - 163 221</u> (FETTE)<br>* Document entier * | 1,2,4,5 |
| | -- | |
| | <u>US - A - 1 739 756</u> (GRANVILLE)<br>* Page 2, page 3, colonne de gauche; figure 1 * | 1,2,4,5 |
| | -- | |
| | <u>FR - A - 1 222 385</u> (AEROQUIP)<br>* Document entier * | 1 |
| | -- | |
| | <u>US - A - 2 904 356</u> (LOVE)<br>* Document entier * | 1 |
| | -- | |
| | <u>US - A - 2 024 912</u> (CURTIS)<br>* Document entier * | 1 |
| | -- | |
| | <u>DE - C - 90 864</u> (DOYEN)<br>* Document entier * | 1 |
| | -- ./. | |

**CLASSEMENT DE LA DEMANDE (Int. Cl. 3)**

F 16 C 1/04
        11/06//
F 16 L 27/04
B 25 J 17/02

**DOMAINES TECHNIQUES RECHERCHES (Int. Cl. 3)**

F 16 C 1/00
        11/00
F 16 D 3/00
F 16 B 7/00
F 16 L 27/00
B 25 J 17/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-03-1980 | BALDWIN |

OEB Form 1503.1 06.78

| Catégorie | Citation du document avec indication, en cas de besoin, des parties pertinentes | Revendication concernée |
|---|---|---|
| A | FR - A - 647 582 (SOCIETE DES RACCORDS) | |
| A | FR - A - 478 169 (ECAUBERT) | |
| A | FR - A - 623 576 (KELLER) | |
| A | DE - C - 138 766 (FETTE) | |

**DOCUMENTS CONSIDERES COMME PERTINENTS**

----

CLASSEMENT DE LA DEMANDE (Int. Cl. 3)

DOMAINES TECHNIQUES RECHERCHES (Int. Cl. 3)